(19) Europäisches Patentamt
European Patent Office
Office européen des brevets

(11) EP 3 975 069 A1

(12) # EUROPEAN PATENT APPLICATION

(43) Date of publication:
**30.03.2022 Bulletin 2022/13**

(21) Application number: **21193917.8**

(22) Date of filing: **31.08.2021**

(51) International Patent Classification (IPC):
***G06N 5/02*** *(2006.01)*

(52) Cooperative Patent Classification (CPC):
**G06N 5/02;** G06N 3/0454; G06N 3/08; G06N 5/003; G06N 20/10

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2020 JP 2020151476**

(71) Applicant: **SCREEN Holdings Co., Ltd.**
**Kyoto 602-8585 (JP)**

(72) Inventors:
- **SUMIYA, Yuki**
  **Kyoto-shi, 602-8585 (JP)**
- **KASUBUCHI, Kiyotaka**
  **Kyoto-shi, 602-8585 (JP)**
- **YOSHIDA, Akiko**
  **Kyoto-shi, 602-8585 (JP)**
- **TERADA, Manri**
  **Kyoto-shi, 602-8585 (JP)**
- **UMEHARA, Koki**
  **Kyoto-shi, 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **INFORMATION PROCESSING APPARATUS, INFORMATION PROCESSING SYSTEM AND INFORMATION PROCESSING METHOD**

(57) Learning data representing the relationship between explanatory variables and objective variables is acquired by an acquirer. In the learning data acquired by the acquirer, a hierarchical relationship among a plurality of items included in the objective variable is determined by a hierarchy determiner. A construction algorithm to be executed among a plurality of construction algorithms for construction of a learning model is determined by an algorithm determiner based on the hierarchical relationship determined by the hierarchy determiner. A first learning model is constructed by execution of the construction algorithm determined by the algorithm determiner by a learner.

FIG. 2

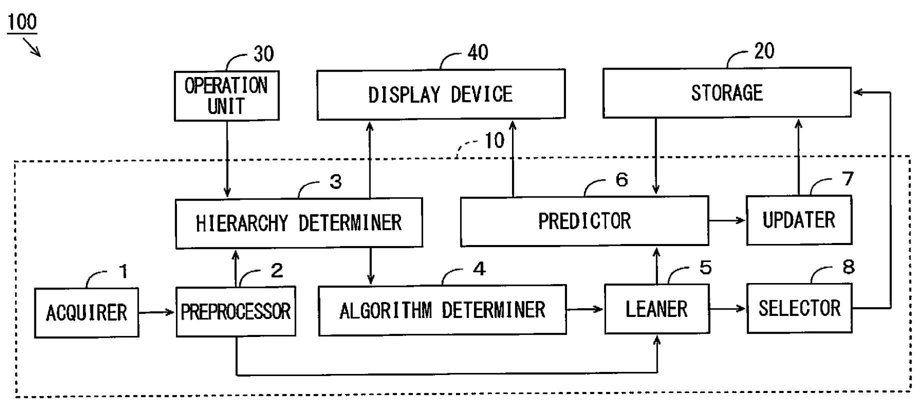


EP 3 975 069 A1

## Description

BACKGROUND

Technical Field

The present invention relates to an information processing apparatus, an information processing system and an information processing method.

Description of Related Art

A learning model constructed by machine learning is used to execute a classification task of conjecturing a label corresponding to data, for example. In JP 2019-3568 A, the procedure for construction of a learning model is described. In this procedure, data to be processed is preprocessed, thereby being converted into a data format that is easily processed by a processing server device. Next, a data process is executed, so that the data to be processed is divided into a model construction data set and a model validation data set.
Subsequently, a machine learning algorithm is executed with the use of the model construction data set, so that a result of learning is acquired. Thereafter, the acquired result of learning is evaluated with the use of the model validation data set. The machine learning algorithm is repeatedly executed until an evaluation value of the result of learning is larger than a predetermined threshold value, whereby a learning model is constructed.

SUMMARY

The structure of a learning model to be constructed differs depending on a machine learning algorithm to be used. Further, accuracy of conjecture of label differs depending on the structure of a learning model to which data to be processed is input. Therefore, it is preferable that a plurality of learning models having different structures are constructed, and it is preferable that a learning model suitable for a process of data to be processed is selected from the plurality of constructed learning models. However, it takes a long period of time to construct a plurality of learning models. Therefore, it is desirable that learning models are constructed efficiently.
An object of the present invention is to provide an information processing apparatus, an information processing system and an information processing method that enables efficient construction of a learning model.

(1) An information processing apparatus according to one aspect of the present invention includes an acquirer that acquires learning data representing a relationship between explanatory variables and objective variables, a hierarchy determiner that determines a hierarchical relationship among a plurality of items included in the objective variable in the learning data acquired by the acquirer, an algorithm determiner that determines a construction algorithm to be executed among a plurality of construction algorithms for constructing a learning model based on the hierarchy relationship determined by the hierarchy determiner, and a learner that constructs a first learning model by executing a construction algorithm determined by the algorithm determiner.
In this information processing apparatus, the construction algorithm determined based on the hierarchical relationship among the plurality of items included in the objective variable of the learning data is executed, whereby the learning data is learned, and the first learning model is constructed. In this case, it is not necessary to execute all of the plurality of construction algorithms, and an unnecessary construction algorithm is not executed. Thus, the first learning model can be constructed sufficiently.
(2) Each of the plurality of construction algorithms may include a feature extraction algorithm for extracting a feature from the learning data and a learning algorithm for learning based on the learning data, and the algorithm determiner may determine the construction algorithm to be executed by determining a learning algorithm to be executed among a plurality of learning algorithms in the plurality of construction algorithms based on the hierarchical relationship determined by the hierarchy determiner. In this case, the construction algorithm to be executed can be determined easily.
(3) The hierarchy determiner may automatically determine the hierarchical relationship based on an inclusive relationship among a plurality of items in the learning data. In this case, a burden on the user can be reduced.
(4) The hierarchy determiner may determine the hierarchical relationship by receiving designation or edit of the hierarchical relationship. In this case, the hierarchical relationship can be determined more accurately.
(5) The information processing apparatus may further include a predictor that predicts a period of time required for construction of the first learning model corresponding to the determined construction algorithm by using a second learning model for predicting a processing period of time. In this case, the user can easily identify the period of time required for construction of the first learning model.

(6) The information processing apparatus may further include an updater that updates the second learning model based on an actual elapsed period of time when construction of the first learning model corresponding to the determined construction algorithm ends. In this case, the period of time required for construction of the first learning model can be predicted with higher accuracy.

(7) An information processing system according to another aspect of the present invention further includes the information processing apparatus according to the one aspect of the present invention, and a display device that displays a plurality of items in learning data used in the information processing apparatus. In this information processing system, the user can easily identify a plurality of items in the learning data.

(8) The display device may display the hierarchical relationship among the plurality of items such that the hierarchical relationship is editable. In this case, the hierarchical relationship can be determined more accurately.

(9) An information processing method according to yet another aspect of the present invention includes acquiring learning data representing a relationship between explanatory variables and objective variables, determining a hierarchical relationship among a plurality of items included in the objective variable in the acquired learning data, determining a construction algorithm to be executed among a plurality of construction algorithms for constructing a learning model based on the determined hierarchical relationship, and constructing a first learning model by executing the determined construction algorithm.

With this information processing method, the construction algorithm determined based on the hierarchical relationship among the plurality of items included in the objective variable of the learning data is executed. Thus, the learning data is learned, and the first learning model is constructed. In this case, it is not necessary to execute all of the plurality of construction algorithms, and an unnecessary construction algorithm is not executed. Thus, the first learning model can be constructed sufficiently.

(10) Each of the plurality of construction algorithms may include a feature extraction algorithm for extracting a feature from the learning data and a learning algorithm for learning based on the learning data, and the determining a construction algorithm may include determining the construction algorithm to be executed by determining a learning algorithm to be executed among a plurality of learning algorithms in the plurality of construction algorithms based on the determined hierarchical relationship. In this case, the construction algorithm to be executed can be determined easily.

(11) The determining the hierarchical relationship may include automatically determining the hierarchical relationship based on an inclusive relationship among a plurality of items in the learning data. In this case, a burden on the user can be reduced.

(12) The determining a hierarchical relationship may include receiving designation or edit of the hierarchical relationship. In this case, the hierarchical relationship can be determined more accurately.

(13) The information processing method may further include predicting a period of time required for construction of the first learning model corresponding to the determined construction algorithm by using a second learning model for predicting a processing period of time. In this case, the user can easily identify the period of time required for construction of the first learning model.

(14) The information processing method may further include updating the second learning model based on an actual elapsed period of time when construction of the first learning model corresponding to the determined construction algorithm ends. In this case, the period of time required for construction of the first learning model can be predicted with higher accuracy.

Other features, elements, characteristics, and advantages of the present disclosure will become more apparent from the following description of preferred embodiments of the present disclosure with reference to the attached drawings.

BRIEF DESCRIPTION OF THE DRAWING

Fig. 1 is a diagram showing an information processing system according to one embodiment;
Fig. 2 is a diagram showing the configuration of an information processing apparatus;
Fig. 3 is a diagram showing one example of learning data pieces;
Fig. 4 is a simplified diagram of the learning data pieces of Fig. 3;
Fig. 5 is a diagram showing one example of a hierarchical relationship designation screen;
Fig. 6 is a diagram showing one example of an algorithm screen;
Fig. 7 is a diagram showing one example of a learning start screen;
Fig. 8 is a flowchart showing a model constructing process executed by the information processing apparatus of Fig. 2; and
Fig. 9 is a flowchart showing the model constructing process executed by the information processing apparatus of Fig. 2.

DETAILED DESCRIPTION

(1) Configuration of Information Processing System

An information processing apparatus, an information processing system and an information processing method according to embodiments of the present invention will be described below with reference to the drawings. Fig. 1 is a diagram showing the configuration of the information processing system according to one embodiment of the present invention. As shown in Fig. 1, the information processing system 100 is constituted by the information processing apparatus 10, a storage device 20, an operation unit 30 and a display device 40. The information processing apparatus 10, the storage device 20, the operation unit 30 and the display device 40 are connected to a bus 101.

The information processing apparatus 10 includes a CPU (Central Processing Unit) 11, a RAM (Random Access Memory) 12 and a ROM (Read Only Memory) 13. The RAM 12 is used as a work area for the CPU 11. The ROM 13 stores a system program. The information processing apparatus 10 constructs various learning models for conjecturing a label of an objective variable from an explanatory variable by learning learning data representing the relationship between the explanatory variables and the objective variables. Details of the information processing apparatus 10 will be described below. Hereinafter, a learning model constructed by the information processing apparatus 10 is referred to as a conjecture model.

The storage device 20 includes a storage medium such as a hard disc or a semiconductor memory and stores a constructing program for causing the information processing apparatus 10 to execute a constructing process, described below. The constructing program may be stored in the ROM 13 or another external storage device. The storage device 20 may store a constructing program constructed by the information processing apparatus 10. Further, the storage device 20 stores a plurality of learning models (hereinafter referred to as predictive models) for predicting a period of time in which a process is executed by the information processing apparatus 10.

The operation unit 30 is an input device such as a keyboard, a mouse or a touch panel. A user can designate or edit the hierarchical relationship among items included in an objective variable in learning data by operating the operation unit 30. The display device 40 is a display device such as a liquid crystal display device and displays a plurality of items and so on in learning data.

(2) Configuration of Information Processing Apparatus

Fig. 2 is a diagram showing the configuration of the information processing apparatus 10. As shown in Fig. 2, the information processing apparatus 10 includes an acquirer 1, a preprocessor 2, a hierarchy determiner 3, an algorithm determiner 4, a learner 5, a predictor 6, an updater 7 and a selector 8 as functions. The functions of the information processing apparatus 10 are implemented by execution of the constructing program stored in the ROM 13, the storage device 20 or the like by the CPU 11 of Fig. 1. Part or all of the functions of the information processing apparatus 10 may be implemented by hardware such as an electronic circuit.

The acquirer 1 acquires a plurality of learning data pieces representing the relationship between explanatory variables and objective variables. The preprocessor 2 converts the plurality of learning data pieces into formats readable by the hierarchy determiner 3 or the learner 5 by preprocessing the plurality of learning data pieces acquired by the acquirer 1.

The hierarchy determiner 3 determines the hierarchical relationship among a plurality of items included in the objective variable in the learning data pieces that are preprocessed by the preprocessor 2. The hierarchical relationship may be automatically determined based on an inclusive relationship among the plurality of items in the learning data pieces or may be determined by reception of designation or edit by the user. In a case where the hierarchical relationship is determined automatically, a burden on the user is reduced. Meanwhile, the plurality of items in the learning data pieces are displayed in the display device 40 such that their hierarchical relationship is editable. The user can designate or edit the hierarchical relationship among the items by operating the operation unit 30. In this case, the hierarchical relationship is determined more accurately.

The algorithm determiner 4 determines one or more construction algorithms to be executed among a plurality of construction algorithms for constructing a conjecture model based on the hierarchical relationship determined by the hierarchy determiner 3. Here, each of the plurality of construction algorithms includes a feature extraction algorithm for extracting a feature from the learning data pieces and a learning algorithm for learning based on the learning data pieces.

In the present example, one or more learning algorithms to be executed among a plurality of predetermined learning algorithms are determined based on the hierarchical relationship determined by the hierarchy determiner 3. The one or more construction algorithms to be executed are determined by a combination of one or more predetermined feature extraction algorithms and one or more learning algorithms to be executed.

The learner 5 learns the plurality of learning data pieces that are preprocessed by the preprocessor 2 by sequentially executing the one or more construction algorithms determined by the algorithm determiner 4. Thus, one or more conjecture models respectively corresponding to the one or more construction algorithms are constructed. In the construction of each conjecture model, learning is repeated while a parameter is changed to be optimal.

The predictor 6 acquires a predictive model corresponding to the construction algorithm determined by the algorithm determiner 4 among the plurality of predictive models stored in the storage device 20. Further, during execution of each construction algorithm, the predictor 6 predicts a period of time required for construction of a conjecture model corresponding to the construction algorithm using the acquired predictive model, and causes the display device 40 to display a remaining period of time until the conjecture model is constructed. The predictor 6 may cause the display device 40 to display progress (%) of construction of the conjecture model together with the remaining period of time or instead of the remaining period of time.

A predictive model is a learning model that outputs a processing period of time as an objective variable when an attribute relating to learning is input as an explanatory variable, and is constructed by a regression model such as random forest, SVM (Support Vector Machine) or deep learning. An attribute, relating to learning, which is an explanatory variable includes the capacity of learning data, the number of cores of the CPU 11, the capacity of the RAM 12, the number of repetitions of learning for optimization of a parameter and a parameter search range of a feature extraction algorithm and a parameter search range of a learning algorithm, for example.

In the present example, a predicted period of time is corrected each time learning is repeated for optimization of a parameter. The corrected predicted period t of time is expressed by the following formula (1). In the formula (1), $t_0$ represents a processing period of time at a current point in time. n represents the number of executions of learning for optimization of a parameter at the current point in time. $N_m$ represents the maximum number of repetitions of learning for optimization of a parameter at the current point in time.
[Formula 1]

$$t = t_0 \times \frac{n_m}{n} \qquad (1)$$

The updater 7 updates a predictive model stored in the storage device 20 based on an actual elapsed period of time each time construction of a conjecture model corresponding to a construction algorithm determined by the algorithm determiner 4 ends. In this case, a period of time required for construction of a conjecture model can be predicted with higher accuracy. In the present example, the updater 7 further updates a predictive model based on an attribute relating to learning used for construction of a construction algorithm. The selector 8 selects the conjecture model having highest accuracy among one or more conjecture models constructed by the learner 5. The selector 8 may cause the storage device 20 to store the selected conjecture model.

(3) Determination of Hierarchical Relationship

Fig. 3 is a diagram showing one example of learning data pieces. In the example of Fig. 3, the ten learning data pieces from a "learning data piece 1" to a "learning data piece 10" are shown. In each learning data piece, an explanatory variable is "damage," and an objective variable includes five items from an "item 1" to an "item 5." The "item 1" to the "item 5" are the "name of industrial category," the "name of industrial subcategory," the "name of industrial further subcategory," the "name of causal category" and the "name of causal subcategory," respectively.

In the example of Fig. 3, the "item 1" is in a hierarchical level higher than the "item 2," the "item 2" is in a hierarchical level higher than the "item 3," and the "item 4" is in a hierarchical level higher than the "item 5." Meanwhile, the "item 1," the "item 2" and the "item 3" do not have a hierarchical relationship with the "item 4" or the "item 5." Presence or absence of a hierarchical relationship among a plurality of items can be judged by a judgment formula based on an inclusive relationship among the plurality of items. In a case where it is judged that a hierarchical relationship is present among the plurality of items, the hierarchical relationship is automatically determined.

The judgment formula for judging presence or absence of a hierarchical relationship between the "item a" and the "item b" is expressed by the following formula (2). In the formula (2), $N_1$ represents the total number of combinations of the label of the "item a" and the label of the "item b." $N_2$ represents the total number of combinations of labels in which the "item a" $\supseteq$ the "item b." $\alpha$ is a threshold value indicating severity of judgment and is set by the user to a value larger than 0 and smaller than 1. In a case where the formula (2) holds, it is judged that a hierarchical relationship is present between the "item a" and the "item b," and it is judged that the "item a" is in a hierarchical level higher than the "item b."
[Formula 2]

$$\frac{N_2}{N_1} > \alpha \qquad (2)$$

Judgment of presence or absence of a hierarchical relationship between the "item 2" and the "item 3" of Fig. 3 will be described below, by way of example. Fig. 4 is a simplified diagram of the learning data pieces of Fig. 3. In Fig. 4, only the "item 2" and the "item 3" are extracted from the learning data pieces of Fig. 3. Further, in order to facilitate understanding, the labels of items are respectively abbreviated as "A" to "L." In the present example, the number of labels of the "item 2" is five, and the labels are "A" to "E." The number of labels of the "item 3" is seven, and the labels are "F" to "L." Therefore, the total number $N_1$ of combinations of the labels of the "item 2" and the labels of the "item 3" is thirty five ($5 \times 7 = 35$).

Further, the total number $N_2$ of combinations in which the "item 2" $\supseteq$ the "item 3" is seven {"A," "F,"} {"A," "G,"} {"A," "H,"} {"B," "I,"} {"C," "J,"} {"D," "K"} and {"E," "L."} In this case, a value on the left side of the above-mentioned formula (2) is 0.2. Therefore, in a case where the threshold value $\alpha$ on the right side is set smaller than 0.2, it is judged that a hierarchical relationship is present between the "item 2" and the "item 3," and it is judged that the "item 2" is in a hierarchical level higher than the "item 3." The user can edit the judged hierarchical relationship by operating the operation unit 30 of Fig. 2.

Further, a hierarchical relationship is not determined automatically and may be determined by being designated by the user. In the display device 40 of Fig. 2, a hierarchical relationship designation screen for receiving designation of a hierarchical relationship is displayed. The user can designate a hierarchical relationship by operating in the hierarchical relationship designation screen by using the operation unit 30 of Fig. 2.

Fig. 5 is a diagram showing one example of the hierarchical relationship designation screen. As shown in Fig. 5, a switch 51 is displayed in the hierarchical relationship designation screen 50. In a case where the switch 51 is turned off, designation of a hierarchical relationship is not to be received. In a case where the switch 51 is turned on, a plurality of check boxes 52 respectively corresponding to a plurality of hierarchical relationships among the items are further displayed in the hierarchical relationship designation screen 50. The user can designate a hierarchical relationship corresponding to a check box 52 by checking the desired check box 52.

Further, in a case where designation of a hierarchical relationship is received, a tree structure diagram 53 representing a hierarchical relationship among a plurality of items is further displayed in the hierarchical relationship designation screen 50. The user can further edit a hierarchical relationship by operating the structure diagram 53. In the structure diagram 53, items can be switched to be displayed or not displayed for each hierarchy. Therefore, in a case where the number of hierarchies is large, the user can easily identify a hierarchical relationship among desired items by not displaying items of unnecessary hierarchies in the structure diagram 53.

(4) Determination of Structure Algorithm

In learning data, a hierarchical relationship is determined, so that one or more construction algorithms to be executed are determined. Specifically, a learning algorithm that is not required to be executed among a plurality of predetermined learning algorithms is defined by determination of a hierarchical relationship. Therefore, a learning algorithm that is not required to be executed is excluded from the plurality of predetermined learning algorithms, whereby one or more learning algorithms to be executed are determined. One or more construction algorithms to be executed are determined by a combination of one or more predetermined feature extraction algorithms and one or more determined learning algorithms.

An algorithm screen showing the one or more determined structure algorithms to be viewable is displayed in the display device 40 of Fig. 2. Fig. 6 is a diagram showing one example of the algorithm screen. As shown in Fig. 6, the algorithm screen 60 includes a feature extraction algorithm display field 61 and a learning algorithm display field 62. In the feature extraction algorithm display field 61, a plurality of check boxes 61a respectively corresponding to a plurality of predetermined feature extraction algorithms are shown. The plurality of predetermined feature extraction algorithms include Word2Vec, Bow (Bag of Words) and TF-IDF (Tem Frequency-Inverse Document Frequency).

In the learning algorithm display field 62, a plurality of check boxes 62a respectively corresponding to a plurality of predetermined learning algorithms are displayed. The plurality of predetermined learning algorithms include an MLP (Multilayer Perceptron), a RFC (Random Forest Classifier), an SWEM NN (Simple Word-Embedding-based Methods Neural Network), a CNN (Convolutional Neutral Network), a Light GBM (Light Gradient Boosting Machine) and an SVM.

In the algorithm screen 60, check boxes 61a respectively corresponding to feature extraction algorithms to be executed (the Word2Vec, the BoW and the TF-IDF in the present example) are checked. Further, check boxes 62a respectively corresponding to the learning algorithms to be executed (the MLP, the SWEM NN and the CNN in the present example) are checked. The user can change a feature extraction algorithm to be executed or a learning algorithm to be executed by operating a desired check box 61a, 62a.

A combination of a feature extraction algorithm a check box 61a of which is checked and a learning algorithm a check box 62a of which is checked is shown as one or more construction algorithms to be executed. Since the SWEM NN includes an algorithm for extracting a feature from learning data, in a case where the SWEM NN is executed, a feature extraction algorithm is not used. Therefore, in the example of Fig. 6, seven ($3 \times 2 + 1 = 7$) combinations of construction algorithms are shown.

In a case where the above-mentioned determination of a hierarchical relationship is not performed, all of the feature extraction algorithms and all of the learning algorithms are to be executed. In this case, all of the check boxes 61a, 62b are checked. Thus, sixteen ($3 \times 5 + 1 = 16$) combinations of construction algorithms are shown.

After construction algorithms are determined, a learning start screen is displayed in the display device 40. Fig. 7 is a diagram showing one example of the learning start screen. As shown in Fig. 7, a start button 71 is displayed in the learning start screen 70. Further, in the learning start screen 70, explanatory variables, objective variable, feature extraction algorithms and learning algorithms in learning are displayed, and a diagram showing a flow of learning is displayed. The user can provide an instruction for starting learning by operating the start button 71.

(5) Model Construction Process

Figs. 8 and 9 are flowcharts showing a model constructing process executed by the information processing apparatus 10 of Fig. 2. The model constructing process of Figs. 8 and 9 is executed by execution of the constructing program stored in the ROM 13, the storage device 20 or the like on the RAM 12 by the CPU 11 of Fig. 1. The model constructing process will be described below with reference to the information processing apparatus 10 of Fig. 2 and the flowcharts of Figs. 8 and 9.

First, the acquirer 1 acquires a plurality of learning data pieces (step S1). The plurality of learning data pieces may be acquired from the storage device 20 or acquired from an external storage medium. Next, the preprocessor 2 preprocesses each learning data piece acquired in the step S1 (step S2). Subsequently, the hierarchy determiner 3 judges presence or absence of a hierarchical relationship among a plurality of items included in an objective variable in the learning data piece that is preprocessed in the step S2 based on the formula (2). In a case where a hierarchical relationship is not determined automatically, the step S3 is not performed.

Thereafter, the hierarchy determiner 3 judges whether an instruction for designating or editing a hierarchical relationship has been provided (step S4). In a case where an instruction for designating or editing a hierarchical relationship has not been provided, the hierarchy determiner 3 proceeds to the step S6. In the hierarchical relationship designation screen 50 of Fig. 5, the user can provide an instruction for designating or editing a hierarchical relationship. In a case where an instruction for designating or editing a hierarchical relationship is provided, the hierarchy determiner 3 changes a hierarchical relationship based on the designation or edit (the step S5) and proceeds to the step S6. In the step S6, the hierarchy determiner3 determines a hierarchical relationship (step S6).

Next, the algorithm determiner 4 determines one or more learning algorithms to be executed among a plurality of predetermined learning algorithms based on the hierarchical relationship determined in the step S6 (step S7). Subsequently, the algorithm determiner 4 determines one or more construction algorithms to be executed by a combination of one or more predetermined feature extraction algorithms and the one or more learning algorithms determined in the step S7 (step S8). In the present example, unique identification numbers 1 to N are respectively supplied to determined N (N is an integer that is equal to or larger than 1) construction algorithms.

Thereafter, the algorithm determiner 4 determines whether an instruction for starting learning has been provided (step S9). The user can provide an instruction for starting learning by operating the start button 71 in the learning start screen 70 of Fig. 7. On the other hand, the user can operate the check boxes 61a, 62a in the algorithm screen 60 of Fig. 6 without providing an instruction for starting learning. In this case, the algorithm determiner 4 returns to the step S8 and determines a construction algorithm again based on the details of operation in regard to the check boxes 61a, 62a. The steps S8 and S9 are repeated until an instruction for starting learning is provided.

In a case where an instruction for starting learning is provided, the learner 5 sets a value of a variable i indicating an identification number of a construction algorithm to 1 (step S10). Next, the learner 5 selects an i-th construction algorithm (step S11). Subsequently, the predictor 6 predicts a period of time required for construction of a conjecture model corresponding to the construction algorithm by using a predictive model corresponding to the construction algorithm determined in the step S11 (step S12). Thereafter, the predictor 6 causes the display device 40 to display a remaining period of time until the conjecture model is constructed based on the period of time predicted in the step S12 or a predicted period of time corrected in the step S17, described below (step S13).

Thereafter, the learner 5 learns a plurality of learning data pieces that are preprocessed in the step S2 by executing the construction algorithm selected in the step S11 (step S14). Thus, the conjecture model corresponding to the selected construction algorithm is constructed. Then, the learner 5 judges whether optimization of a parameter has ended (step S15).

In a case where optimization of a parameter has not ended, the learner 5 changes the parameter (step S16). Further, the predictor 6 corrects the predicted period of time based on the formula (1) (step S17) and returns to the step S13. The steps S13 to S17 are repeated until optimization of a parameter ends in a predetermined range of the maximum number of repetitions of learning.

In a case where the optimization of a parameter has ended, the updater 7 updates a predictive model stored in the storage device 20 based on an actual elapsed period of time and an attribute relating to learning. Subsequently, the learner 5 determines whether the value of the variable i is N (step S19). In a case where the value of the variable i is not N, the learner 5 increases the value of the variable i by 1 (step S20) and returns to the step S11. The steps S11 to 20 are repeated until the value of the variable i is N.

In a case where the value of the variable i is N, the selector 8 selects a conjecture model having the highest accuracy among N conjecture models constructed by learning in the step S14 (step S21) and ends the model constructing process. The selector 8 may cause the storage device 20 to store the conjecture model selected in the step S21.

(6) Effects

In the information processing apparatus 10 according to the present embodiment, a construction algorithm determined based on a hierarchical relationship among a plurality of items included in an objective variable of learning data is executed. Thus, the learning data is learned, and a conjecture model is constructed. In this case, it is not necessary to execute all of the plurality of construction algorithms, and an unnecessary construction algorithm is not executed. Further, an improbable hierarchical relationship is prevented from being learned. Thus, accuracy of learning can be improved, and a conjecture model can be constructed efficiently.

Further, a period of time required for construction of a conjecture model corresponding to a determined construction algorithm is predicted with the use of a predictive model. With this configuration, even in a case where the relationship between an attribute relating to learning and a processing period of time is nonlinear, a period of time required for construction of a conjecture model can be predicted. Therefore, the user can easily identify a period of time required for construction of a conjecture model.

Further, a predicted period of time is corrected based on an actual elapsed period of time each time learning is repeated for optimization of a parameter. Thus, a period of time required for construction of a conjecture model can be predicted with higher accuracy. As a result, the information processing apparatus 10 can be managed more accurately, and construction of a conjecture model can be planned more accurately.

(7) Other Embodiments

(a) While a predictive model is updated based on an actual elapsed period of time when construction of each conjecture model ends in the above-mentioned embodiment, the embodiment is not limited to this. A predictive model does not have to be updated. In this case, the information processing apparatus 10 does not have to include the updater 7.

(b) While a period of time required for construction of a conjecture model is predicted in the above-mentioned embodiment, the embodiment is not limited to this. A period of time required for construction of a conjecture model does not have to be predicted. In this case, the information processing apparatus 10 does not have to include the predictor 6 or the updater 7, and a predictive model does not have to be stored in the storage device 20.

(c) While the information processing apparatus 10 includes the selector 8 in the above-mentioned embodiment, the embodiment is not limited to this. In a case where a plurality of conjecture models constructed by the learner 5 are stored in the storage device 20, only one conjecture model is constructed, etc., the information processing apparatus 10 does not have to include the selector 8.

(8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained. As each of constituent elements recited in the claims, various other elements having configurations or functions described in the claims can be also used.

In the above-mentioned embodiment, the acquirer 1 is an example of an acquirer, the hierarchy determiner 3 is an example of a hierarchy determiner, the algorithm determiner 4 is an example of an algorithm determiner and the learner 5 is an example of a learner. The information processing apparatus 10 is an example of an information processing apparatus, the predictor 6 is an example of a predictor, the updater 7 is an example of an updater, the display device 40 is an example of a display device and the information processing system 100 is an example of an information processing system.

While preferred embodiments of the present disclosure have been described above, it is to be understood that variations and modifications will be apparent to those skilled in the art without departing the scope and spirit of the present disclosure. The scope of the present disclosure, therefore, is to be determined solely by the following claims.

## Claims

1. An information processing apparatus comprising:

    an acquirer that acquires learning data representing a relationship between explanatory variables and objective variables;
    a hierarchy determiner that determines a hierarchical relationship among a plurality of items included in the objective variable in the learning data acquired by the acquirer;
    an algorithm determiner that determines a construction algorithm to be executed among a plurality of construction algorithms for constructing a learning model based on the hierarchy relationship determined by the hierarchy determiner; and
    a learner that constructs a first learning model by executing a construction algorithm determined by the algorithm determiner.

2. The information processing apparatus according to claim 1, wherein

    each of the plurality of construction algorithms includes a feature extraction algorithm for extracting a feature from the learning data and a learning algorithm for learning based on the learning data, and
    the algorithm determiner determines the construction algorithm to be executed by determining a learning algorithm to be executed among a plurality of learning algorithms in the plurality of construction algorithms based on the hierarchical relationship determined by the hierarchy determiner.

3. The information processing apparatus according to claim 1 or 2, wherein the hierarchy determiner automatically determines the hierarchical relationship based on an inclusive relationship among a plurality of items in the learning data.

4. The information processing apparatus according to any one of claims 1 to 3, wherein
    the hierarchy determiner determines the hierarchical relationship by receiving designation or edit of the hierarchical relationship.

5. The information processing apparatus according to any one of claims 1 to 4, further comprising a predictor that predicts a period of time required for construction of the first learning model corresponding to the determined construction algorithm by using a second learning model for predicting a processing period of time.

6. The information processing apparatus according to claim 5, further comprising an updater that updates the second learning model based on an actual elapsed period of time when construction of the first learning model corresponding to the determined construction algorithm ends.

7. An information processing system further comprising:

    the information processing apparatus according to any one of claims 1 to 6; and
    a display device that displays a plurality of items in learning data used in the information processing apparatus.

8. The information processing system according to claim 7, wherein
    the display device displays the hierarchical relationship among the plurality of items such that the hierarchical relationship is editable.

9. An information processing method including:

    acquiring learning data representing a relationship between explanatory variables and objective variables;
    determining a hierarchical relationship among a plurality of items included in the objective variable in the acquired learning data;
determining a construction algorithm to be executed among a plurality of construction algorithms for constructing a learning model based on the determined hierarchical relationship; and
constructing a first learning model by executing the determined construction algorithm.

**10.** The information processing method according to claim 9, wherein

each of the plurality of construction algorithms includes a feature extraction algorithm for extracting a feature from the learning data and a learning algorithm for learning based on the learning data, and
the determining a construction algorithm includes determining the construction algorithm to be executed by determining a learning algorithm to be executed among a plurality of learning algorithms in the plurality of construction algorithms based on the determined hierarchical relationship.

**11.** The information processing method according to claim 9 or 10, wherein the determining the hierarchical relationship includes automatically determining the hierarchical relationship based on an inclusive relationship among a plurality of items in the learning data.

**12.** The information processing method according any one of claims 9 to 11, wherein
the determining a hierarchical relationship includes receiving designation or edit of the hierarchical relationship.

**13.** The information processing method according to any one of claims 9 to 12, further including predicting a period of time required for construction of the first learning model corresponding to the determined construction algorithm by using a second learning model for predicting a processing period of time.

**14.** The information processing method according to claim 13, further including updating the second learning model based on an actual elapsed period of time when construction of the first learning model corresponding to the determined construction algorithm ends.

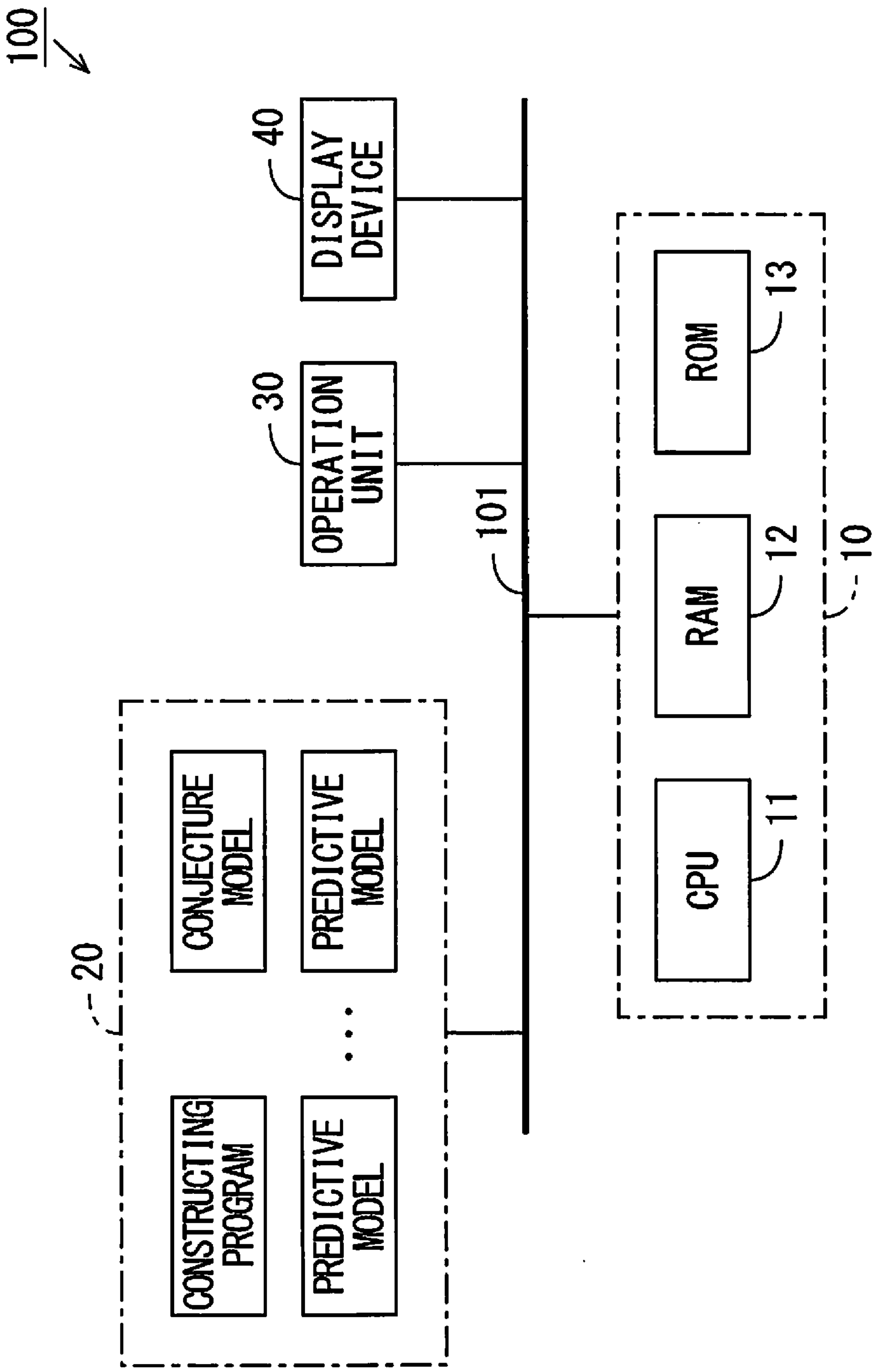
100
DISPLAY DEVICE
40
OPERATION UNIT
30
101
CONJECTURE MODEL
PREDICTIVE MODEL
CONSTRUCTING PROGRAM
PREDICTIVE MODEL
20
ROM
13
RAM
12
CPU
11
10

F I G. 1

FIG. 2

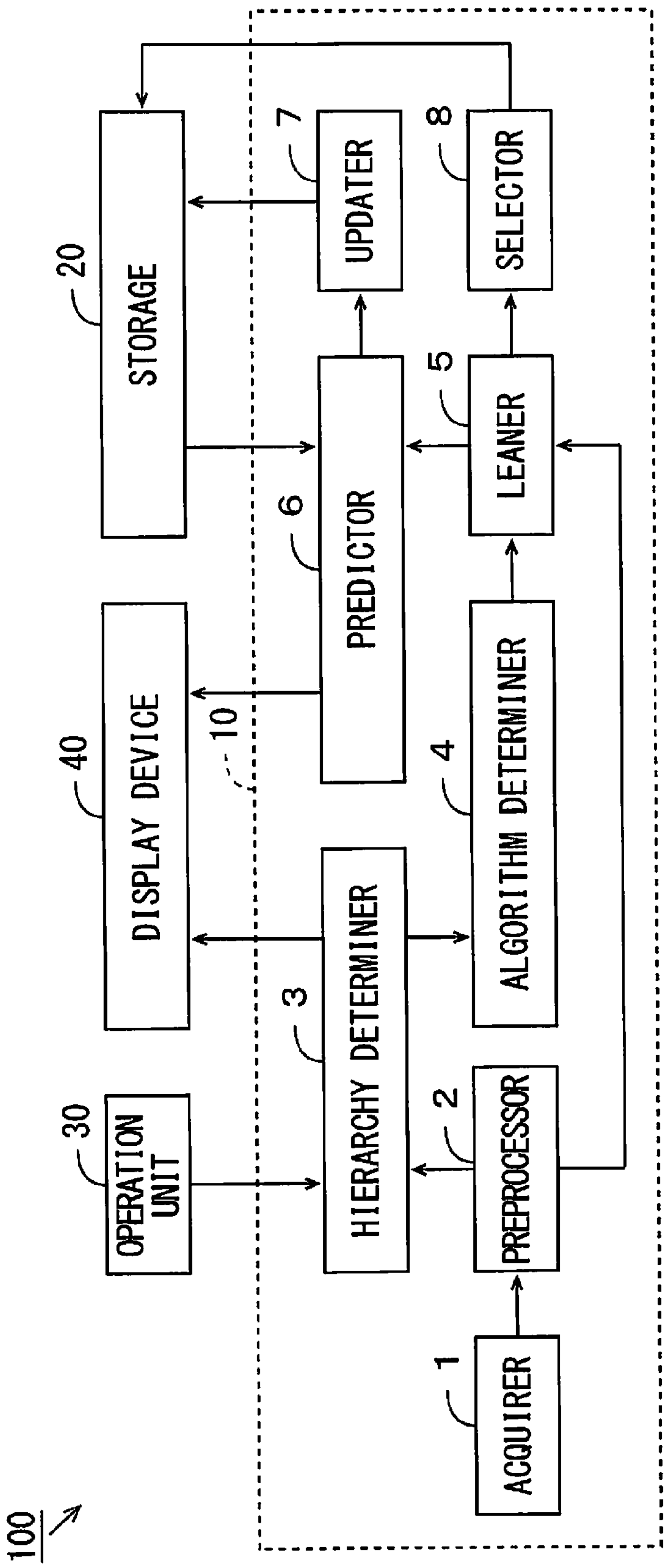
100
ACQUIRER
1
PREPROCESSOR
2
HIERARCHY DETERMINER
3
ALGORITHM DETERMINER
4
LEANER
5
PREDICTOR
6
UPDATER
7
SELECTOR
8
10
STORAGE
20
OPERATION UNIT
30
DISPLAY DEVICE
40

F I G. 3

| | EXPLANATORY VARIANCE | OBJECTIVE VARIABLE | | | | |
|---|---|---|---|---|---|---|
| | | ITEM 1 | ITEM 2 | ITEM 3 | ITEM 4 | ITEM 5 |
| | DAMAGE | NAME OF INDUSTRIAL CATEGORY | NAME OF INDUSTRIAL SUBCATEGORY | NAME OF INDUSTRIAL FURTHER SUBCATEGORY | NAME OF CAUSAL CATEGORY | NAME OF CAUSAL SUBCATEGORY |
| LEARNING DATA PIECE 1 | INJURED DURING ○○ING | MANUFACTURING | FOOD MANUFACTURING | OTHER FOOD MANUFACTURING | OTHER DEVICES, ETC. | TOOLS |
| LEARNING DATA PIECE 2 | INJURED DURING △△ING | MANUFACTURING | FOOD MANUFACTURING | SEAFOOD MANUFACTURING | ENVIRONMENT, ETC. | ENVIRONMENT, ETC. |
| LEARNING DATA PIECE 3 | ... | MANUFACTURING | FOOD MANUFACTURING | OTHER FOOD MANUFACTURING | LIFTING DEVICE, TRANSPORT MACHINERY | POWER CARRIER |
| LEARNING DATA PIECE 4 | ... | MANUFACTURING | FOOD MANUFACTURING | OTHER FOOD MANUFACTURING | POWER MACHINERY | METAL PROCESSING MACHINERY |
| LEARNING DATA PIECE 5 | ... | MANUFACTURING | FOOD MANUFACTURING | BREAD AND CONFECTIONERY MANUFACTURING | OTHER DEVICES, ETC. | MAN POWERED MACHINERY TOOL, ETC. |
| LEARNING DATA PIECE 6 | ... | MANUFACTURING | OTHER MANUFACTURING | CAR MAINTENANCE INDUSTRY | TEMPORARY BUILDING, BUILDING, STRUCTURE, ETC. | TEMPORARY BUILDING, BUILDING, STRUCTURE, ETC. |
| LEARNING DATA PIECE 7 | ... | MANUFACTURING | FOOD MANUFACTURING | OTHER FOOD MANUFACTURING | TEMPORARY BUILDING, BUILDING, STRUCTURE, ETC. | TEMPORARY BUILDING, BUILDING, STRUCTURE, ETC. |
| LEARNING DATA PIECE 8 | ... | MANUFACTURING | TEXTILE MANUFACTURING | OUTERWEAR AND UNDERWEAR MANUFACTURING | ENVIRONMENT, ETC. | ENVIRONMENT, ETC. |
| LEARNING DATA PIECE 9 | ... | MANUFACTURING | CERAMIC, STONE AND CLAY PRODUCTS MANUFACTURING | REFRACTORY MANUFACTURING | SUBSTANCE, MATERIAL | MATERIAL |
| LEARNING DATA PIECE 10 | ... | MANUFACTURING | CHEMICAL INDUSTRY | PLASTIC MANUFACTURING | POWER MACHINERY | GENERAL POWER MACHINERY |

FIG. 4

| | ITEM 2 | ITEM 3 |
|---|---|---|
| LEARNING DATA PIECE 1 | A | F |
| LEARNING DATA PIECE 2 | A | G |
| LEARNING DATA PIECE 3 | A | F |
| LEARNING DATA PIECE 4 | A | F |
| LEARNING DATA PIECE 5 | A | H |
| LEARNING DATA PIECE 6 | B | I |
| LEARNING DATA PIECE 7 | A | F |
| LEARNING DATA PIECE 8 | C | J |
| LEARNING DATA PIECE 9 | D | K |
| LEARNING DATA PIECE 10 | E | L |

F I G. 5

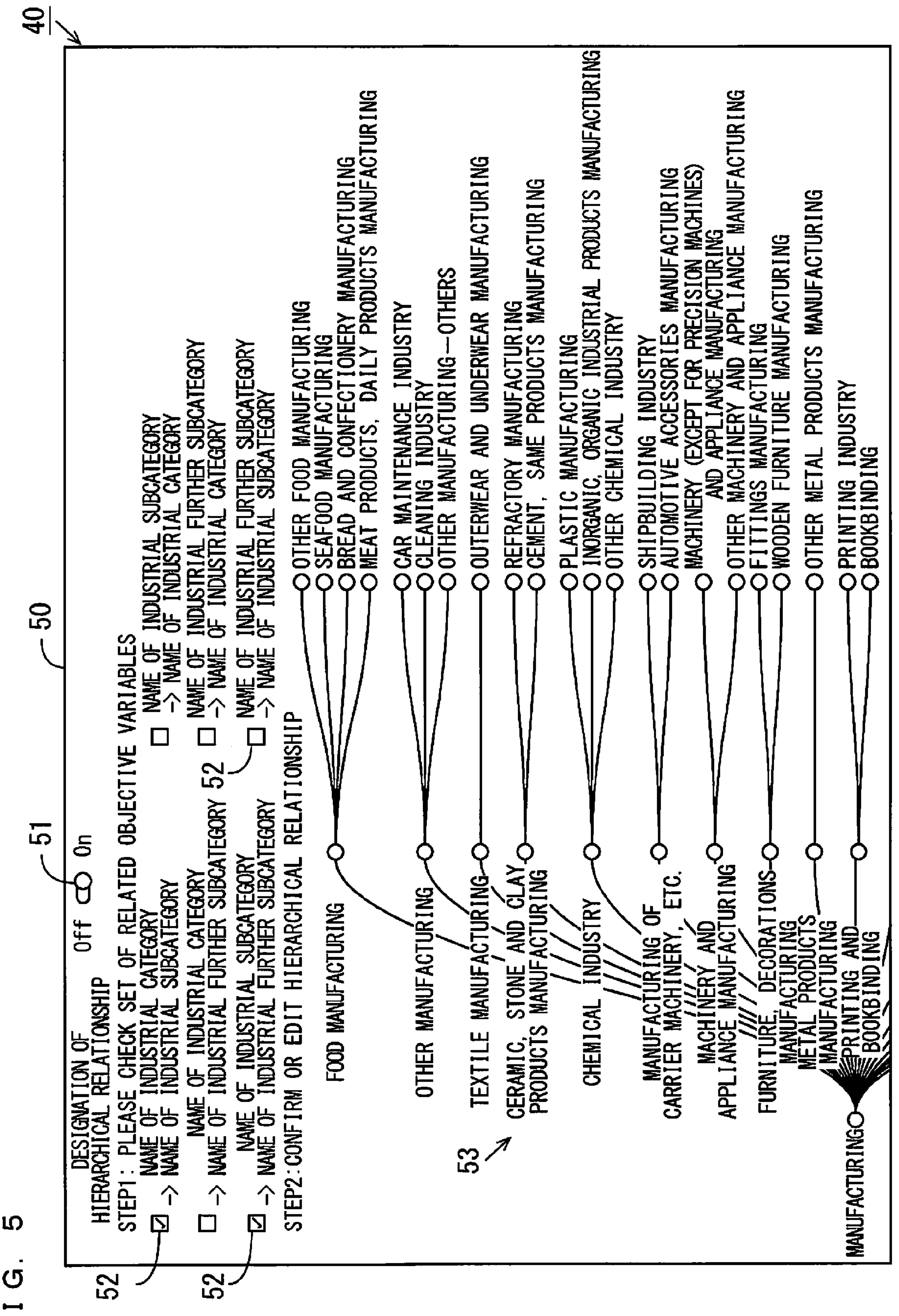
40
50
51
52
53
DESIGNATION OF HIERARCHICAL RELATIONSHIP
Off
On
STEP1: PLEASE CHECK SET OF RELATED OBJECTIVE VARIABLES
NAME OF INDUSTRIAL CATEGORY -> NAME OF INDUSTRIAL SUBCATEGORY
NAME OF INDUSTRIAL SUBCATEGORY -> NAME OF INDUSTRIAL CATEGORY
NAME OF INDUSTRIAL CATEGORY -> NAME OF INDUSTRIAL FURTHER SUBCATEGORY
NAME OF INDUSTRIAL FURTHER SUBCATEGORY -> NAME OF INDUSTRIAL CATEGORY
NAME OF INDUSTRIAL SUBCATEGORY -> NAME OF INDUSTRIAL FURTHER SUBCATEGORY
NAME OF INDUSTRIAL FURTHER SUBCATEGORY -> NAME OF INDUSTRIAL SUBCATEGORY
STEP2: CONFIRM OR EDIT HIERARCHICAL RELATIONSHIP
MANUFACTURING
FOOD MANUFACTURING
OTHER MANUFACTURING
TEXTILE MANUFACTURING
CERAMIC, STONE AND CLAY PRODUCTS MANUFACTURING
CHEMICAL INDUSTRY
MANUFACTURING OF CARRIER MACHINERY, ETC.
MACHINERY AND APPLIANCE MANUFACTURING
FURNITURE, DECORATIONS MANUFACTURING
METAL PRODUCTS MANUFACTURING
PRINTING AND BOOKBINDING
OTHER FOOD MANUFACTURING
SEAFOOD MANUFACTURING
BREAD AND CONFECTIONERY MANUFACTURING
MEAT PRODUCTS, DAILY PRODUCTS MANUFACTURING
CAR MAINTENANCE INDUSTRY
CLEANING INDUSTRY
OTHER MANUFACTURING—OTHERS
OUTERWEAR AND UNDERWEAR MANUFACTURING
REFRACTORY MANUFACTURING
CEMENT, SAME PRODUCTS MANUFACTURING
PLASTIC MANUFACTURING
INORGANIC, ORGANIC INDUSTRIAL PRODUCTS MANUFACTURING
OTHER CHEMICAL INDUSTRY
SHIPBUILDING INDUSTRY
AUTOMOTIVE ACCESSORIES MANUFACTURING
MACHINERY (EXCEPT FOR PRECISION MACHINES) AND APPLIANCE MANUFACTURING
OTHER MACHINERY AND APPLIANCE MANUFACTURING
FITTINGS MANUFACTURING
WOODEN FURNITURE MANUFACTURING
OTHER METAL PRODUCTS MANUFACTURING
PRINTING INDUSTRY
BOOKBINDING

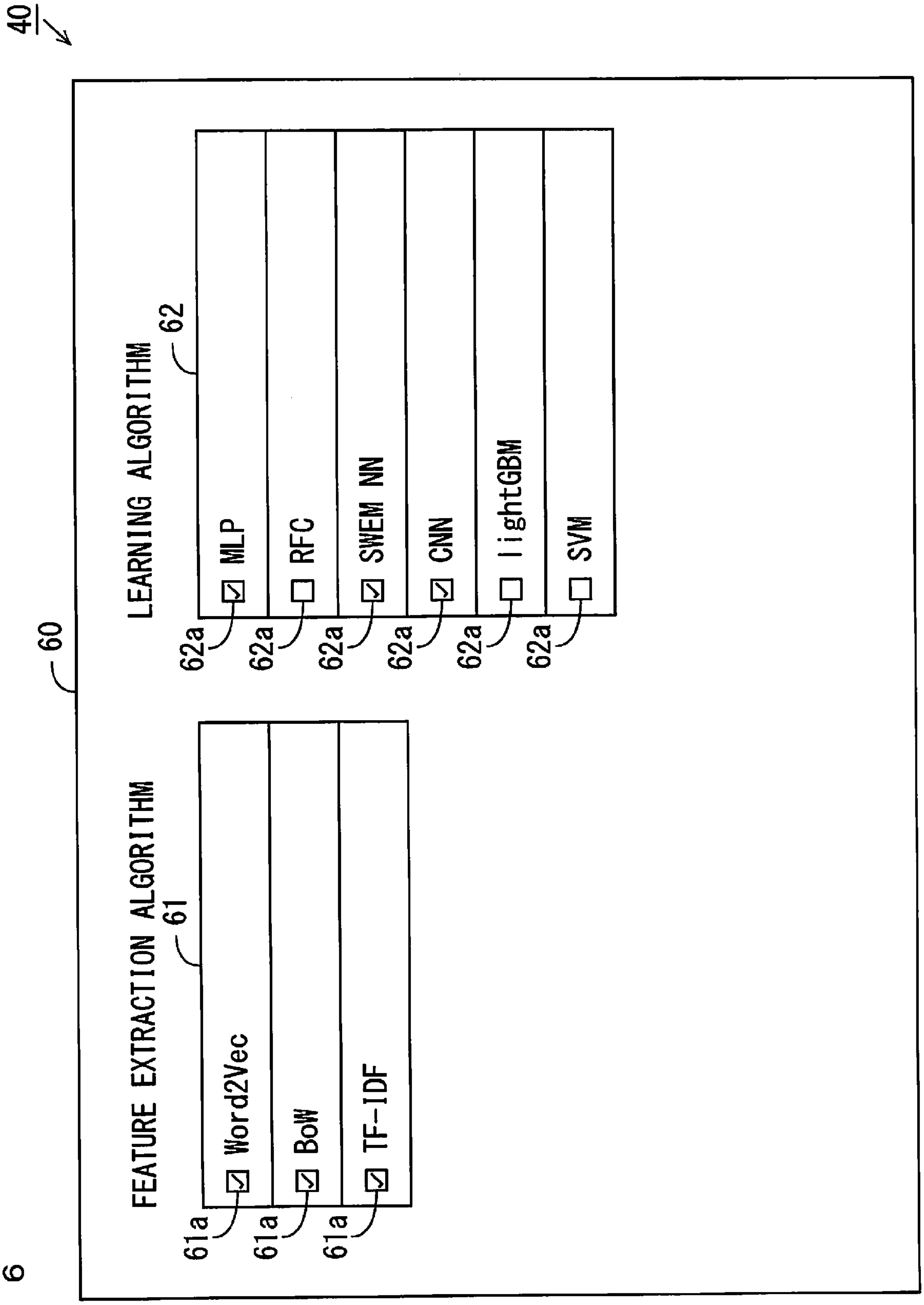
40
60
FEATURE EXTRACTION ALGORITHM
61
Word2Vec
BoW
TF-IDF
61a
61a
61a
LEARNING ALGORITHM
62
MLP
RFC
SWEM NN
CNN
lightGBM
SVM
62a
62a
62a
62a
62a
62a

F I G. 6

F I G. 7

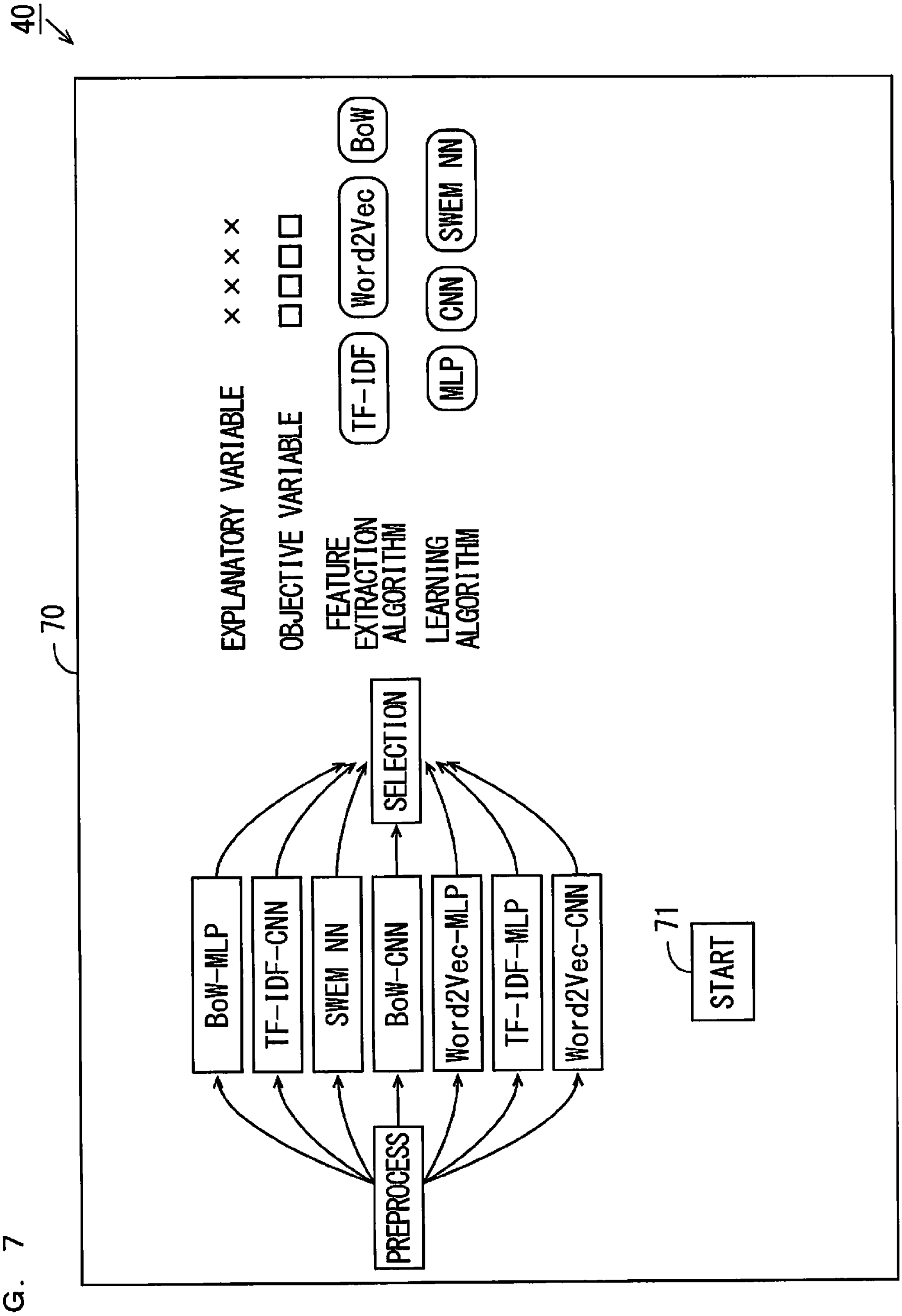
40
70
EXPLANATORY VARIABLE
××××
OBJECTIVE VARIABLE
□□□□
FEATURE EXTRACTION ALGORITHM
TF-IDF
Word2Vec
BoW
LEARNING ALGORITHM
MLP
CNN
SWEM NN
PREPROCESS
BoW-MLP
TF-IDF-CNN
SWEM NN
BoW-CNN
Word2Vec-MLP
TF-IDF-MLP
Word2Vec-CNN
SELECTION
71
START

FIG. 8

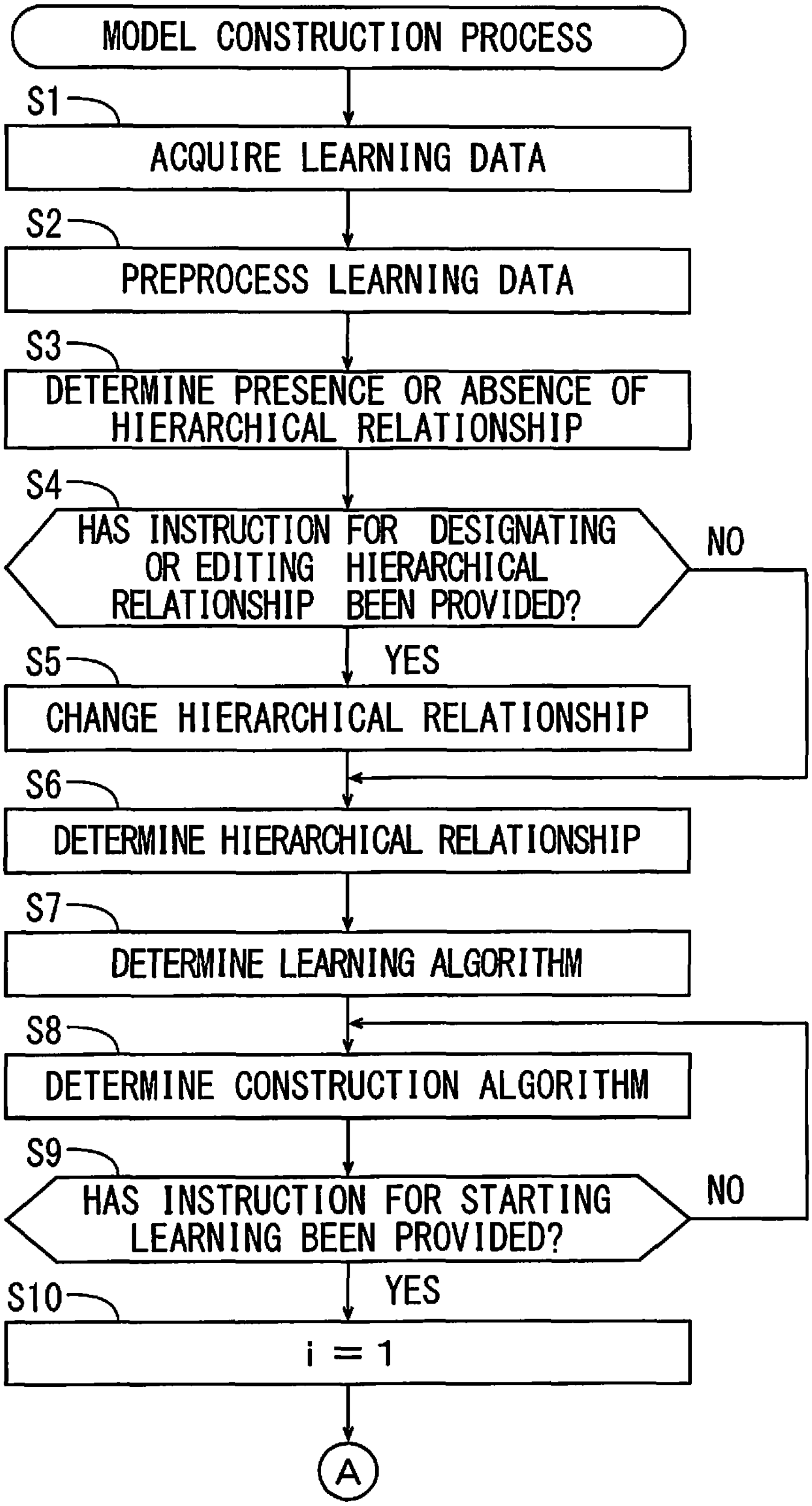
MODEL CONSTRUCTION PROCESS
S1
ACQUIRE LEARNING DATA
S2
PREPROCESS LEARNING DATA
S3
DETERMINE PRESENCE OR ABSENCE OF HIERARCHICAL RELATIONSHIP
S4
HAS INSTRUCTION FOR DESIGNATING OR EDITING HIERARCHICAL RELATIONSHIP BEEN PROVIDED?
NO
YES
S5
CHANGE HIERARCHICAL RELATIONSHIP
S6
DETERMINE HIERARCHICAL RELATIONSHIP
S7
DETERMINE LEARNING ALGORITHM
S8
DETERMINE CONSTRUCTION ALGORITHM
S9
HAS INSTRUCTION FOR STARTING LEARNING BEEN PROVIDED?
NO
YES
S10
i = 1
A

FIG. 9

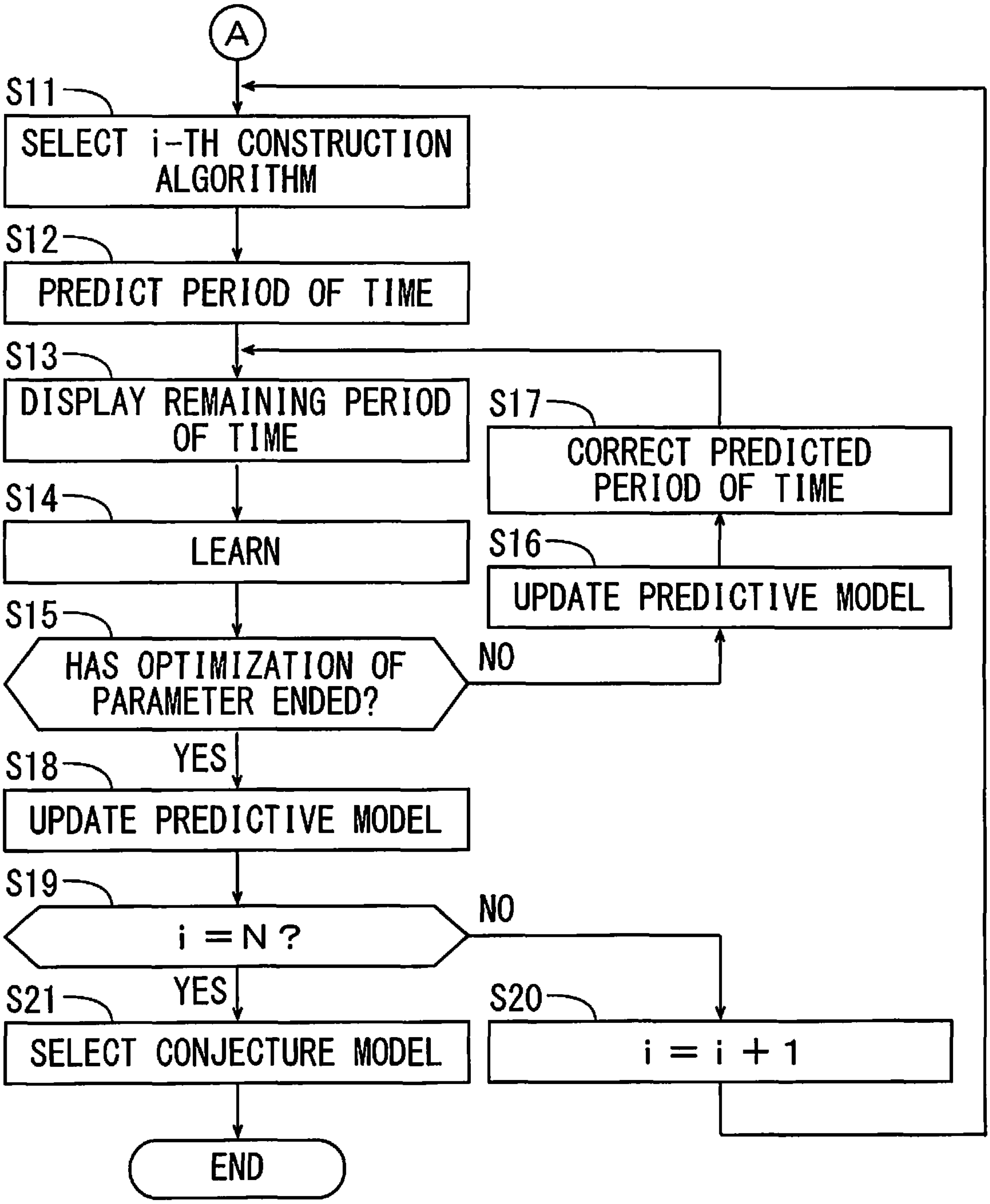
A
S11
SELECT i-TH CONSTRUCTION ALGORITHM
S12
PREDICT PERIOD OF TIME
S13
DISPLAY REMAINING PERIOD OF TIME
S14
LEARN
S15
HAS OPTIMIZATION OF PARAMETER ENDED?
NO
S16
UPDATE PREDICTIVE MODEL
S17
CORRECT PREDICTED PERIOD OF TIME
YES
S18
UPDATE PREDICTIVE MODEL
S19
i = N ?
NO
S20
i = i + 1
YES
S21
SELECT CONJECTURE MODEL
END

Europäisches Patentamt
European Patent Office
Office européen des brevets

# EUROPEAN SEARCH REPORT

Application Number
EP 21 19 3917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/088789 A1 (MOTOHASHI YOSUKE [JP] ET AL) 26 March 2015 (2015-03-26)<br>* paragraphs [0039] - [0191]; figures 1-19 *<br>----- | 1-14 | INV.<br>G06N5/02 |
| A | US 10 692 601 B2 (HITACHI LTD [JP]) 23 June 2020 (2020-06-23)<br>----- | 1-14 | |
| | | | TECHNICAL FIELDS SEARCHED (IPC) |
| | | | G06N<br>B60S |

1 The present search report has been drawn up for all claims

| Place of search | Date of completion of the search | Examiner |
|---|---|---|
| The Hague | 11 February 2022 | Czarik, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 19 3917

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2022

| Patent document cited in search report | Publication date | Patent family member(s) | Publication date |
|---|---|---|---|
| US 2015088789 A1 | 26-03-2015 | CN 105556546 A | 04-05-2016 |
| | | JP 6330901 B2 | 30-05-2018 |
| | | JP 2016537693 A | 01-12-2016 |
| | | US 2015088789 A1 | 26-03-2015 |
| | | WO 2015040806 A1 | 26-03-2015 |
| US 10692601 B2 | 23-06-2020 | EP 3291241 A1 | 07-03-2018 |
| | | JP 6454762 B2 | 16-01-2019 |
| | | JP 2018032394 A | 01-03-2018 |
| | | US 2018060513 A1 | 01-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019003568 A